Europäisches Patentamt

European Patent Office

Office européen des brevets

(11) Veröffentlichungsnummer: **0 291 563 B1**

(19)

(12) **EUROPÄISCHE PATENTSCHRIFT**

(45) Veröffentlichungstag der Patentschrift: **30.09.92**

(21) Anmeldenummer: **87110932.8**

(22) Anmeldetag: **28.07.87**

(51) Int. Cl.⁵: **B23B 51/10**

(54) Schneidmesser zum Entgraten von Bohrungen.

(30) Priorität: **21.05.87 DE 3717135**
**04.06.87 DE 3718731**

(43) Veröffentlichungstag der Anmeldung:
**23.11.88 Patentblatt 88/47**

(45) Bekanntmachung des Hinweises auf die
Patenterteilung:
**30.09.92 Patentblatt 92/40**

(84) Benannte Vertragsstaaten:
**AT BE CH DE ES FR GB GR IT LI LU NL SE**

(56) Entgegenhaltungen:
**EP-A- 0 231 818**
**DD-A- 229 056**
**DE-B- 2 407 269**
**DE-C- 2 649 208**

(73) Patentinhaber: **Heule, Heinrich**

**CH-9436 Balgach(CH)**

(72) Erfinder: **Heule, Heinrich**

**CH-9436 Balgach(CH)**

(74) Vertreter: **Riebling, Peter, Dr.-Ing., Patentanwalt et al
Rennerle 10, Postfach 31 60
W-8990 Lindau/B.(DE)**

**Beschreibung**

Die Erfindung betrifft ein Werkzeug zum Entgraten von Bohrungen, nach dem Oberbegriff des Patentanspruches 1.

Ein derartiges Werkzeug zum Entgraten von Bohrungen sieht eine paarweise Anordnung der Schneidmesser vor, wobei in einem drehend angetriebenen Werkzeughalter in einem rechteckförmigen Aufnahmeschlitz die Schneidmesser gegenüberliegend mit radial nach außen weisenden konischen Schneidkanten angeordnet sind. Die Schneidmesser werden durch eine im Inneren des Werkzeughalters angeordnete Feder mittels Zapfen an einer Welle nach außen gedrückt, wobei die Zapfen in jeweils eine Nut der Schneidkörper eingreifen. Nach dem Patent DE-PS 26 49 208 sind die Schneidmesser in radialer Richtung gleichsinnig verschiebbar. Insoweit liegen in Ruhestellung die Schneidmesser unter Federkraft radial nach außen ausgefahren vor. In Arbeitsstellung beim Entgraten einer Bohrung werden wegen des wirkenden Vorschubes des Werkzeughalters und wegen des konischen Verlaufs der Schneidkanten die Schneidmesser beim Anfasen von Bohrungskanten gegen die Federkraft immer mehr radial einwärts verschoben, bis sie schließlich drehend den Innenbereich der Bohrung erreichen.

Der Werkzeughalter wird dann mit den Schneidmessern durch die Bohrung hindurchgefahren, um dem Arbeitsvorschub rückwärts die hintere Bohrungskante zu bearbeiten.

Die Schneidmesser weisen hierzu auf einer gegenüberliegenden Seite eine weitere Schneidkante auf, so daß nach dem Durchfahren der Bohrung der Bohrungsrand bei gleichem Schneidverlauf, aber in anderer Vorschubrichtung, auch von der Rückseite her, entgratet und angefast werden kann.

Bei einem bekannten Schneidmesser nach der DE-C 26 49 208 oder der DE-B 24 07 269 ist es hierbei nachteilig, daß am Ende des Bearbeitungsvorganges beim weiteren radialen Einschieben der Schneidmesser zum Durchfahren der Bohrung die eben erstellte Fase und weiterhin im Innenbereich der Bohrung deren Innenfläche beschädigt werden können.

Bei dem bekannten Schneidmessern konnten die Schneidmesser im Werkzeughalter durch in die Messerführung eindringende Späne auch leicht verklemmen, so daß beim Durchfahren einer Bohrung, um die Rückseite zu entgraten, die Innenfläche der Bohrung beschädigt wurde.

Bei den bekannten Schneidmessern bestand auch die Gefahr, daß diese unsachgemäß in den Werkzeughalter eingesetzt wurden, so daß das Werkzeug funktions- und schneidunfähig wurde und die Bohrung beschädigte.

Aufgabe der vorliegenden Erfindung ist es, ein Werkzeug der eingangs genannten Art so auszubilden, daß bei hoher Betriebssicherheit eine Beschädigung von erstellten Fasen oder die Beschädigung der Innenfläche einer Bohrung beim weiteren Verlauf des Bearbeitungsvorganges vermieden werden.

Zur Lösung der Aufgabe sind die Merkmale des kennzeichnenden Teils des Patentanspruches 1 vorgesehen.

Das Wesen der Erfindung liegt darin, am Schneidmesser zwar wirksame Schneideinrichtungen vorzusehen, gleichzeitig aber auch Schutzflächen und kurvenartige Anschliffebenen, in deren Bereich die Schneidmesser gefahrlos, für die erstellten Fasen oder den nicht zu bearbeitenden Innenbereich einer Bohrung, geführt werden können.

Beim Anbringen einer Fase am Bohrrand liegt das Schneidmesser zunächst schneidend am Borrand an, weil in diesem radialen Bereich des Schneidmessers an der Freifläche der Schneidkante nach Art einer Hinterschleifung ein Wirkfreiwinkel gebildet wird. Beim weiteren Bearbeitungsvorgang wird das Schneidmesser immer mehr radial nach innen in den Werkzeughalter eingeschoben, bis das Schneidmesser mit seiner Freifläche auf der erstellten Fase aufliegt. In diesem Bereich verschwindet der Freiwinkel, d.h. er geht in einen Nullbereich über, so daß das Schneidmesser insgesamt unschneidfähig vorliegt und lediglich drückend an der Fase aufliegt. Bei weiterem Vorschub kann nun das Schneidmesser ohne Gefahr für die erstellte Fase über die Fase hinweg, radial nach innen, in die Messerführung gefahren werden, um die Bohrung zu durchfahren und um die Bohrung bei entgegengesetzter Vorschubrichtung auch von der Rückseite her zu entgraten. Insoweit wird beim weiteren radialen Verschieben der Schneidkante auf der erstellten Fase ein nachteiliger Sekundärgrad vermieden.

Beim Übergang der Schneidmesser in die Bohrung wird die Innenfläche der Bohrung gegenüber den Stirnseiten der drehenden Schneidkanten geschützt, weil nun die Stirnseite des Messerkopfes ballig angeschliffen ausgebildet ist. Insoweit können nun auch in besonders vorteilhafter Weise empfindliche Bohrungen entgratet werden, z.B. Bohrungen mit hoher Oberflächengüte, Bohrungen in Kunststoffmaterial und insbesondere alle sonstigen leicht zu zerspanenden Materialien.

Vorteilhaft ist es, daß die Schneidkanten der Spanleitstufen um einen Betrag zurückversetzt angeordnet sind, um Aufbauschneiden zu überbrücken. Unter dem Begriff "Aufbauschneide" wird eine bestimmte Verschleißerscheinung an dem Messer, insbesondere an den Schneikanten, verstanden, denn die Schneidkanten nutzen sich nicht nur bei der spanabhebenden Bearbeitung ab, d.h. sie werden abgetragen, sondern es kommt auch zu einem bestimmten Aufbau durch Kaltverschweißung oder Anlagerung von abgetragenem Material auf diesen Schneiden. Die Schneidkante wird also mit diesem Material aufgebaut und dieser Aufbauvorgang wird nun durch die erfindungsgemäße Messergeometrie wirkungslos gemacht, d.h. der unvermeidliche Aufbauvorgang führt nach der Erfindung nicht zu einer Funktionsunfähigkeit des Werkzeuges. Hierzu ist die Schneidkante einer Spanleitstufe um eine Strecke zurückversetzt angeordnet, wodurch in diesem Bereich der Rückversetzung ohne Gefahr Späne abgelagert werden können. Wäre diese Rückversetzung nicht vorhanden, dann würde das Messer genau in die Messerführung am Werkzeugkopf passen, ohne daß ein Zwischenraum vorhanden wäre. In diesem Fall wurde ein Aufbau von abgetragenem Material auf der Messerschneidkante nach relativ kurzer Zeit zu einer Unbrauchbarkeit des Werkzeugs führen, denn das an der Messerschneidkante aufbauende Material könnte die radiale Verstellung dieses Messers verhindern, wodurch z.B. die Innenfläche einer Bohrung beschädigt werden könnte. Wegen dieser Rückversetzung kann man nun also der Schneidkante einen gewissen Aufbau von abgetragenem Material erlauben, ohne daß das Messer dadurch unbrauchbar wird. Damit ist die Funktion dieses Messers auch über eine längere Zeit hinweg gewährleistet und es werden insbesondere Beschädigungen durch Verklemmen des Messers vermieden.

Weiterhin vorteilhaft ist es, daß die Kanten des Schneidkörpers scharfkantig als Körperkanten ausgebildet sind, wobei eine Kante in facettenartiger Ausbildung eine Längsfase aufweist und die Messerführung am Werkzeughalter im Bereich der Längsfasen der Schneidkörper mit jeweils einem Radius versehen ist.

Insoweit können nun die Messer nur lagerichtig in den Werkzeugkopf eingesetzt werden, wobei von da aus Beschädigungen von nicht zu bearbeitenden Flächen vermieden werden. Die Schneidmesser können vielmehr in radialer Richtung, ohne zu klemmen oder zu rucken, eingefahren oder ausgefahren werden.

Die weitere Ausgestaltung der Erfindung ist in den weiteren Unteransprüchen enthalten.

Im folgenden wird die Erfindung anhand von mehrere Lösungswege darstellenden Zeichnungen näher erläutert, wobei aus der nachfolgenden Beschreibung weitere Vorteile hervorgehen.

Es zeigen:

Figur 1: Die Schneidmesser nach der Erfindung beim Beginn des Bearbeitungsvorganges beim Ansetzen an einen zu bearbeitenden Bohrungsrand.

Figur 2: Eine Ansicht in Richtung H nach Figur 1.

Figur 3: eine Ansicht in Richtung C nach Figur 1,

Figur 4: einen Schnitt gemäss A-A nach Figur 1,

Figur 5: eine Ansicht in Richtung E nach Figur 1,

Figur 6: die Schneidmesser nach der Erfindung am Ende des Bearbeitungsvorganges,

Figur 7: einen Schnitt gemäss B-B nach Figur 6,

Figur 8: die Schneidmesser nach der Erfindung beim Durchfahren des Innenbereiches einer Bohrung,

Figur 9: den tangentialen Verlauf der Gleitfläche an der Stirnseite eines Schneidmessers im Vergleich zum tangentialen Verlauf der Innenfläche der Bohrung,

Figur 10: die perspektivische Darstellung eines erfindungsgemässen Schneidmessers.

Bei den dargestellten Figuren gelten die gestrichen aufgeführten Positionszeichen für die Rückwärts-Anfasbewegung und die ungestrichen aufgeführten Positionszeichen für die Vorwärts-Anfasbewegung.

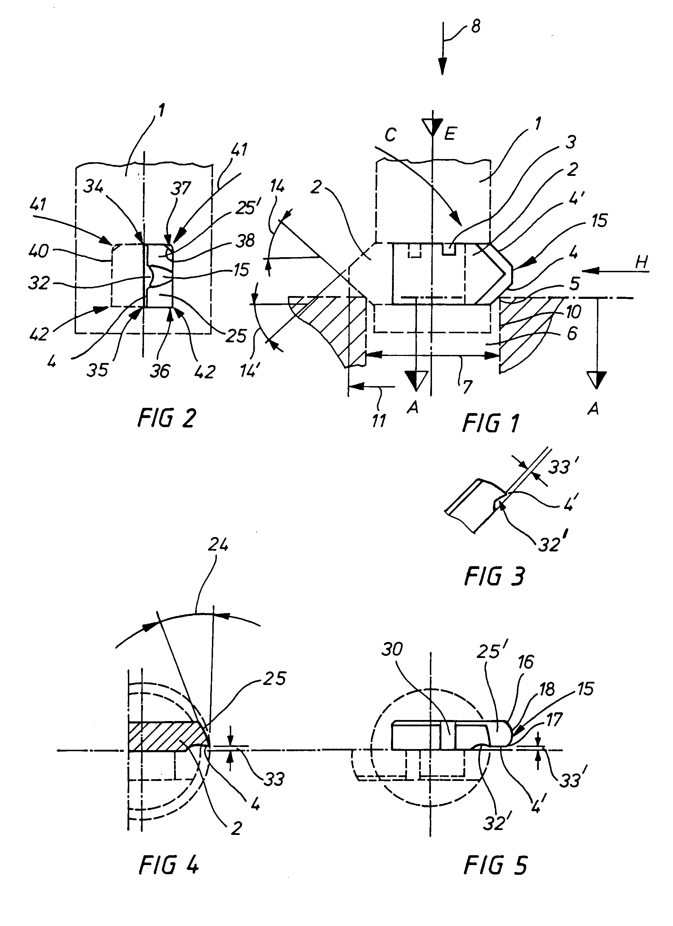

In Figur 1 ist ein Werkzeughalter 1 dargestellt mit paarweise angeordneten Schneidmessern 2, welche in radialer Richtung unter der Federkraft einer hier nicht dargestellten Feder nach außen gedrückt werden. Hierzu sind Mitnahmezapfen 3 vorgesehen, welche in Nute 30 der Schneidmesser 2 unter drehender Bewegung, diese mit Federkraft radial nach außen schieben. Die Schneidmesser 2 können gegen den Federdruck beim wirkenden Vorschub radial nach innen ausweichen.

Es wird im folgenden jeweils immer nur ein Schneidmesser beschrieben, da die Schneidmesser paarweise vorgesehen sind.

Nach Figur 1 befindet sich ein Schneidmesser 2 in maximal ausgefahrener Stellung mit dem Radius 11 am Beginn des Bearbeitungsvorganges. Die Schneidkante 4 befindet sich hierzu bei einer rotierenden Bewegung des Werkzeughalters 1 an einem zu bearbeitenden Rand 5 einer Bohrung 6 mit dem Durchmesser 7 und der Innenfläche 10. Zur Bearbeitung des Randes 5 wird der Werkzeughalter 1 mit dem rotierenden Schneidmesser 4 in Pfeilrichtung 8 in Vorschubrichtung abgesenkt.

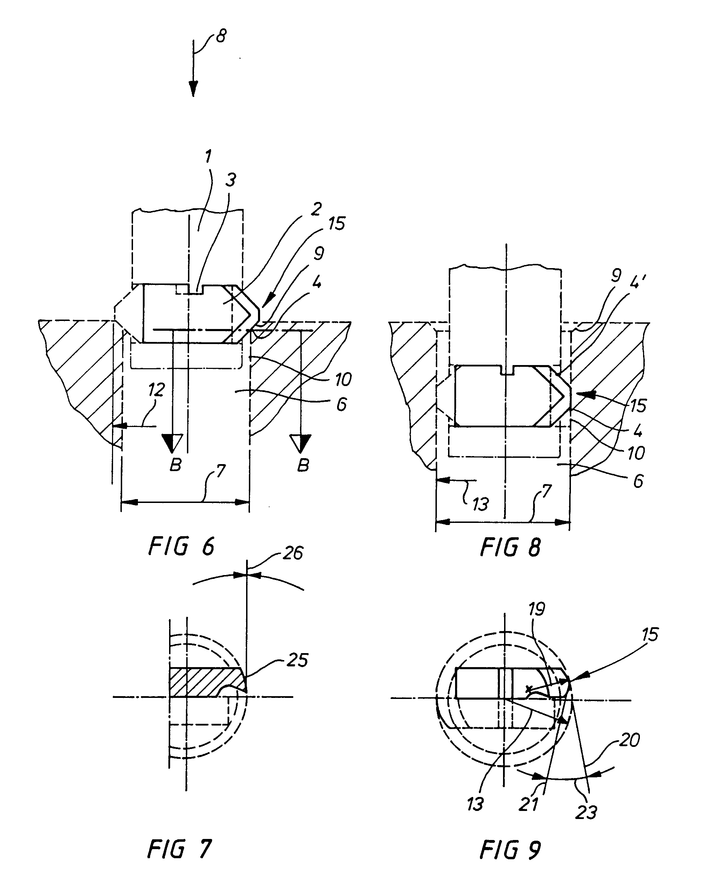

Gemäss Figur 6 ist das Ende des Bearbeitungsvorganges dargestellt mit der Anbringung einer Fase 9.

Die Figur 8 zeigt schließlich die weitere Fortführung der rotierenden Schneidkanten 4 in den Innenbereich der Bohrung 6.

Wegen der Vorschubbewegung in Pfeilrichtung 8 und der konusartigen Abschrägung der Schneidkante 4 gemäss dem Winkel 14 nach Figur 1 werden die Schneidmesser 2 immer mehr radial gegen die Wirkung einer Feder nach innen verlagert, zunächst ausgehend von dem Radius 11 nach Figur 1, dann nach Ende des Bearbeitungsvorganges mit dem Radius 12 nach Figur 6, bis schließlich beim Einfahren in die Bohrung 6 die Schneidmesser 2 den Radius 13 annehmen gemäss dem Innendurchmesser 7 der Bohrung 6.

Bei der Erfindung geht es darum, in Vorwärts- und Rückwärtsrichtung den Bohrrand zu entgraten bzw. anzufasen und insbesondere beim Übergang am Ende des Bearbeitungsvorganges nach Figur 6 in den Innenbereich der Bohrung 6 nach Figur 8 weder die gerade bearbeitete Fase 9 noch die Innenfläche 10 der Bohrung 6 zu beschädigen.

Die Erfindung sieht hier vor, daß die Freiflächen 25 einen kurvenartigen Anschliff aufweisen unter Bildung eines am Ende des Bearbeitungsvorganges verschwindenden Freiwinkels 24 und daß die stirnseitige Anlagefläche 15 ballig geschliffen ausgebildet ist.

Der Verlauf des Freiwinkels 24 bei fortschreitendem Bearbeitungsvorgang ist in den Fig . 4 und 7 näher erläutert.

Am Anfang des Bearbeitungsvorganges nach Figur 1 ist an der Schneidkante 4 ein wirksamer Freiwinkel 24 hinterschliffen, welcher eine vorteilhafte Zerspanung des zu bearbeitenden Materials hervorruft.

Im Laufe des Bearbeitungsvorganges wird der Freiwinkel 24 immer kleiner, bis er schließlich nach Figur 7 am Ende des Bearbeitungsvorganges nach Figur 6 verschwindet, d.h. der Freiwinkel 24 geht dort in einen Nullbereich 26 über. Insoweit liegt die Schneidkante 4 lediglich noch drückend, ohne zu schneiden , auf der gerade erst erstellten Fase 9 auf. Von da aus kann die Schneidkante 4 ohne Gefahr der unerwünschten weiteren Bearbeitung der Fase 9 dem weiteren Vorschub ausgesetzt werden. Hierzu gleitet die Schneidkante 4 über die die Fase 9 hinweg, radial nach innen, und gelangt ständig unter Federkraft nach außen gedrückt, schließlich in den Innenbereich der Bohrung 6.

Innerhalb dieser Bohrung 6 wird die Beschädigung der Innenfläche 10 vermieden, weil gemäss den Fig. 5 und Fig. 9 die Stirnseite des Messerkopfes ballig geschliffen ist, d.h. die stirnseitige Anlagefläche 15 ist als Gleitfläche ausgebildet.

Die Anlagefläche 15 bildet dabei eine linienförmige Gleitfläche an der Innenfläche 10 der Bohrugn 6 nach Fig. 8, so daß von daher Beschädigungen ausgeschlossen sind.

Nach Figur 5 ist die Anlagefläche 15 ballig vorgesehen, d.h. mit abgesenkten vorderen und rückwärtigen Flächen 16,17 gegenüber einer erhabenen Mittenfläche 18. Die Anlagefläche 15 liegt in Bezug auf die Schneidkante 4 hinterschnitten vor, d.h. die hintere Fläche 16 ist gegenüber der vorderen Fläche 17 nach innen versetzt vorgesehen.

Die stirnseitige Anlagefläche 15 bildet je nach Messergröße einen in Schneidrichtung negativen Winkel 23. Insoweit wird vorteilhaft ein nicht-schneidendes Anliegen des Messerkopfes an der Innenfläche 10 der Bohrung 6 erreicht.

Die stirnseitige Anlagefläche 15 ist als Gleitfläche ausgebildet und weist einen außerhalb zur Mitte der Längs- und Querachse des Werkzeugs gerichteten Gleitradius 19 auf, welcher kleiner ist als der Radius 13 der zu bearbeitenden Bohrung 6. Der Radius 19 der balligen Anlagefläche ist nach Figur 9 stets kleiner als der Radius 13 zu einer zu durchfahrenden Bohrung. Hierdurch ist stets gewährleistet, daß beim weiteren Absenken des Messerkopfes keine unerwünschte Zerspanung im Bereich der Innenfläche 10 der Bohrung 6 stattfindet.

Die Tangente 20 an den Bohrungsrand schließt mit der Tangente 21 an die ballige Anlagefläche 15 nach Figur 9 einen Winkel 23 ein, so daß von daher stets eine schneidende Wirkung der Stirnseite des Messerkopfes vermieden werden kann.

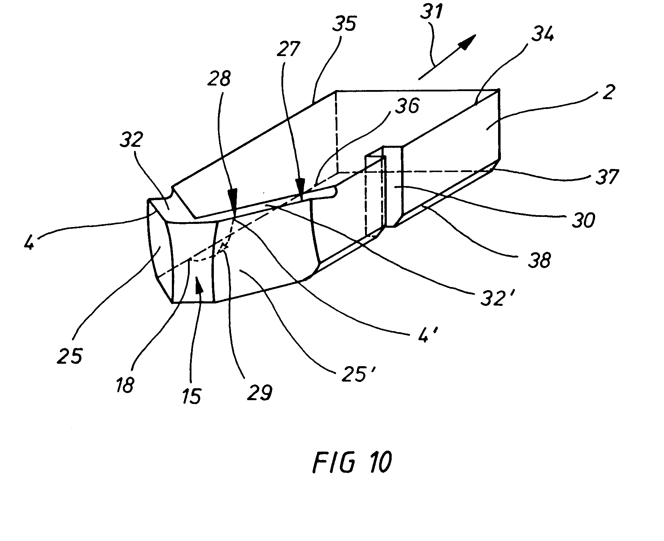

Das Zusammenwirken der Freiflächen 25 in Verbindung mit der ballig ausgebildeten Anlagefläche 15 ist in Figur 10 dort anhand eines Rückwärts-Fräsvorganges näher erläutert.

In dem Arbeitsbereich des Schneidmessers 2 mit der Schneidkante 4 wirkt dort gemäss einem Freiwinkel 24 nach Figur 4 zwischen den Pfeilen 27,28 die optimale Schneidwirkung der Schneidkante 4, um eine Fase 9 zu erstellen. Sobald nun das Schneidmesser 2 wegen des Vorschubes hier entgegen der Pfeilrichtung 8 bei einem Rückwärtsanfasvorgang mehr in die Bohrung 6 eintaucht, als in Figur 6 dargestellt ist, kommt der Gleitradius 19 nach Figur 9 an der stirnseitigen Anlagefläche 15 zum Tragen. Ab dem Pfeil 28 an der Schneidkante 4 führt der Kontaktpunkt des Messers auf der Fase 9 eine bogenförmige Bewegung in Pfeilrichtung 29 aus, bis etwa zur Mittenfläche 18 auf der Anlage bzw. Gleitfläche 15. Diese bogenförmige Kurve in Pfeilrichtung 29 auf der Freifläche 26 sorgt dafür, daß die erstellte Fase 9 selbst nicht mehr beschädigt wird. Insoweit wird also der Schneidvorgang beim Erreichen des Pfeiles 28 gemäss dem Ende des Bearbeitungsvorganges nach Figur 6 abgebrochen. Das Schneidmesser 2 wird dabei kontaktartig an den Berührflächen im Bereich eines Kurvenbogens radial nach innen in Pfeilrichtung 31 verschoben, bis im Innenbereich der Bohrung 6 die Schneide inaktiv mit den Flächen 18 der Anlagefläche 15 an der Innenfläche 10 der Bohrung 6 anliegt.

EP 0 291 563 B1

Damit wird gewährleistet, daß beim radialen Einfahren der Messer 2 in die Bohrung 6 die Fase 9 selbst nicht mehr durch die Schneidmesser 2 bearbeitet wird.

Der Übergang von der Schneidkante 4 vom Punkt 28 zum Punkt 18 bzw. zu der Mittenfläche 18 erfolgt also über die Freifläche 25 in Form dieser bogenförmigen Kurve in Pfeilrichtung 29.

Dieser Übergang von dem Schneidvorgang auf die inaktive Anlagefläche bzw. Gleitfläche 15, d.h. auf die Stirnseite des Messerkopfes, ist auch aus Figur 4 ersichtlich, wo dargestellt ist, daß bei dem Winkel 24 noch geschnitten wird, während in Figur 7 der Winkel 24 in einen Nullbereich 26 übergeht, wo keine Schneidwirkung mehr vorhanden ist.

Insoweit wird also zwischen den Pfeilen 27,28 nach Figur 10 eine optimale Schneidwirkung erzielt.

Hierdurch können alle im Bereich der Werkzeuggröße liegenden Bohrungsdurchmesser mit einem Werkzeug in einem Arbeitsgang entgratet oder angefast werden.

Aus der Fig. 1, Figur 6 und Figur 8 ist ersichtlich, daß das Schneidmesser 2 zur Anbringung von Fasen oder zum Entgraten der Bohrungsränder eingesetzt wird. Mit zunehmender radial einwärts gehender Verschiebung kommt der Freiwinkel 24 letzten Endes in den Nullbereich 26, wodurch das Messer seine Schneidkraft verliert und insoweit ohne Abtragungswirkung in den Innenbereich der Bohrung 6 eingefahren werden kann.

Insoweit kann das Messer auch durch die Bohrung hindurchgefahren werden, ohne eine Schneidwirkung zu entfalten, weil nun im weiteren die Stirnseite des Messerkopfes als Schutzfläche ausgebildet ist.

Nach den Fig. 3 und Figur 5 sind die Schneidkanten 4 der Spanleitstufe 32 um einen Betrag 33 zurückversetzt. Hierbei kann sich an der Schneidkante 4 Material aufbauen, ohne daß dadurch die radiale Verschiebung des Schneidmessers 2 im Werkzeugkopf bzw. in dessen Messerführung 40 behindert wäre. Mit der Spanleitstufe 32 werden Späne nach einer gewissen Länge abgebogen und abgebrochen, womit vermieden wird, daß unzulässig lange Späne in und unter die Messer gelangen, wodurch die Messer blockiert werden könnten und das Werkzeug unbrauchbar wäre. Insoweit wird hier auch ohne die weitere Ausbildung der Schneidmesser schon eine Beschädigung von Fasen oder der Innenflächen von Bohrungen vermieden.

Mit Fig. 2 und Fig. 10 wird ersichtlich, daß die Kanten 34,35,36,37 des Schneidkörpers 2 scharfkantig als Körperkanten ausgebildet sind, wobei eine Kante 37 in facettenartiger Ausbildung eine Längsfase 38 aufweist und die Messerführung am Werkzeughalter 1 im Bereich der Längsfase 38 der Schneidkörper mit jeweils einem Radius 41 versehen ist. Hierdurch können die Schneidmesser 2 nur lagerichtig in den Werkzeughalter 1 dort in die Messerführung 40 eingesetzt werden, wodurch die Funktions- und Schneidfähigkeit gewährleistet ist. Am Werkzeughalter 1 sind zwei scharfe Ecken 42 vorhanden und im Bereich der Messeraufnahme bzw. im Bereich der Messerführung 40 sind gegenüberliegend zwei abgerundete Radien 41 vorhanden, wobei dort nun die facettenartigen Längsfasen 38 eingeschoben werden. Insoweit können die Schneidmesser 2 nur lagerichtig eingesetzt werden.

## ZEICHNUNGS-LEGENDE

| | |
|---|---|
| 1 Werkzeughalter | 31 Pfeilrichtung |
| 2 Schneidmesser | 32 Spanleitstufe |
| 3 Mitnahmezapfen | 33 Betrag |
| 4 Schneidkante | 34 Kanten |
| 5 Rand | 35 Kanten |
| 6 Bohrung | 36 Kanten |
| 8 Pfeilrichtung | 38 Längsfase |
| 9 Fase | |
| 10 Innenfläche | 40 Messerführung |
| 11 Radius | 41 Radius |
| 12 Radius | 42 Ecken |
| 13 Radius | |
| 14 Winkel | |
| 15 Anlagefläche | |
| 16 Fläche | |
| 17 Fläche | Teilflächen von 15 |
| 18 Mittenfläche | |
| 19 Gleitradius | |
| 20 Tangente | |
| 21 Tangente | |
| 23 Winkel | |
| 24 Freiwinkel | |
| 25 Freifläche | |
| 26 Nullbereich | |
| 27 Pfeil | |
| 28 Pfeil | |
| 29 Pfeilrichtung | |
| 30 Nut | |

**Patentansprüche**

1.  Werkzeug zum Entgraten von Bohrungen (6) das zwei Schneidmesser (2), bestehend aus rechteckigen, kantenförmigen Schneidkörpern mit konisch verlaufenden Schneidkanten (4,4'), mit hinterschnitten angeschliffenen Freiflächen (25,25') mit kurvenartigem Anschliff und mit jeweils einer stirnseitigen

6

Anlagefläche (15) am Messerkopf zur Anlage an der Innenfläche (10) einer Bohrung aufweist, wobei die Schneidmesser (2) durch Federkraft radial nach außen gedrückt sind und durch die Vorschubbewegung radial nach innen verschoben werden, **dadurch gekennzeichnet,** daß die Freiflächen (25,25') derart ausgebildet sind, daß zwischen einem ersten Punkt (27) an der Schneidkante (4') nahe des breitesten Teils der konisch verlaufenden Schneidkanten und einem zweiten Punkt (28) an der Schneidkante (4') nahe der stirnseitigen Anlagefläche (15) der Freiwinkel (24) positiv ist und ab dem zweiten Punkt (28) bis Ende der Schneidkante (4') kein Freiwinkel (24) mehr vorhanden ist und daß die stirnseitigen Anlageflächen (15) ballig geschliffen ausgebildet sind.

2.  Werkzeug nach Anspruch 1, **dadurch gekennzeichnet,** daß die stirnseitige Anlagefläche (15) eine Gleitfläche bildet mit einem außerhalb zur Mitte der Längs- und Querachse des Werkzeugs gerichteten Gleitradius (19), welcher kleiner ist als der Radius (13) der zu bearbeitenden Bohrung (6).

3.  Werkzeug nach Anspruch 2, **dadurch gekennzeichnet,** daß die stirnseitige Anlagefläche (15) mit einem Winkel (23) in Schneidrichtung negativ angeschliffen ist.

4.  Werkzeug nach einem der Ansprüche 1 bis 3, **dadurch gekennzeichnet,** daß die Schneidkanten (4) einer Spanleitstufe (32) um einen Betrag (33) zurückversetzt sind.

5.  Werkzeug nach einem der Ansprüche 1 bis 4, **dadurch gekennzeichnet,** daß die Kanten (34,35,36,37) des Schneidkörpers (2) scharfkantig als Körperkanten ausgebildet sind, wobei eine Kante (37) in facettenartiger Ausbildung eine Längsfase (38) aufweist und eine Messerführung am Werkzeughalter (1) im Bereich der Längsfase (38) mit jeweils einem Radius (41) versehen ist.

**Claims**

1.  Tool for deburring bores (6) which comprises two cutting blades (2) consisting of rectangular, edge-like cutting bodies with conically extending cutting edges (4, 4'), with undercut, partially ground flanks (25, 25') with a cam-like ground surface and with in each case a front contact face (15) on the blade head for contact with the inner surface (10) of a bore, wherein the cutting blades (2) are biassed radially outwards by spring force and displaced radially inwards by the advancing movement, characterised in that the flanks (25, 25') are constructed in such a way that between a first point (27) on the cutting edge (4') near the widest portion of the conically extending cutting edges and a second point (28) on the cutting edge (4') near the front contact face (15), the clearance angle (24) is positive, and from the second point (28) to the end of the cutting edge (4') there is no longer a clearance angle (24) and that the front contact faces (15) are ground to a camber.

2.  Tool according to claim 1, characterised in that the front contact face (15) forms a sliding surface with a sliding radius (19) which is directed outwards from the centre of the longitudinal and transverse axes of the tool and which is smaller than the radius (13) of the bore (6) to be machined.

3.  Tool according to claim 2, characterised in that the front contact face (15) is negatively ground with an angle (23) in the direction of cutting.

4.  Tool according to any of claims 1 to 3, characterised in that the cutting edges (4) of a chip guiding step (32) are set back by an amount (33).

5.  Tool according to any of claims 1 to 4, characterised in that the edges (34, 35, 36, 37) of the cutting body (2) are made sharp as body edges, wherein one edge (37) in facet-like construction comprises a longitudinal chamfer (38), and a blade guide on the tool holder (1) in the region of the longitudinal chamfer (38) is provided in each case with a radius (41).

**Revendications**

1.  Outil d'ébarbage de perçages (6), comprenant deux lames (2) formées de corps coupants rectangulaires à arêtes comportant des arêtes coupantes (4, 4') s'étendant suivant une forme conique, des surfaces libres (25, 25') dépouillées et affûtées présentant un affûtage courbe, et des surfaces d'appui respectives (15), prévues côté frontal, au niveau de la tête de lame, en vue de l'appui contre la surface intérieure (10) d'un perçage, les lames (2) étant pressées radialement vers l'extérieur par une force élastique et déplacées radialement vers l'intérieur par le mouvement d'avance, caractérisé en ce que les surfaces libres (25, 25') sont conçues de telle sorte qu'entre un premier point (27) de l'arête coupante (4') situé près de la partie la plus large des arêtes coupantes s'étendant suivant une forme conique, et un second point (28) de l'arête coupante (4') situé près de la surface d'appui (15) prévue côté frontal, l'angle de dépouille (24) est positif et qu'il n'y a plus d'angle de dépouille (24) à partir du second point (28) et jusqu'à l'extrémité de l'arête coupante (4'), et en ce que les surfaces d'appui (15) prévues côté frontal ont une configuration polie bombée.

2. Outil selon la revendication 1, caractérisé en ce que la surface d'appui (15) prévue côté frontal forme une surface de glissement présentant un rayon de glissement (19), orienté, à l'extérieur, vers le milieu de l'axe longitudinal et transversal de l'outil, qui est inférieur au rayon (13) du perçage (6) à usiner.

3. Outil selon la revendication 2, caractérisé en ce que la surface d'appui (15) prévue côté frontal est affûtée suivant un angle (23) négatif dans le sens de coupe.

4. Outil selon l'une des revendications 1 à 3, caractérisé en ce que les arêtes coupantes (4) sont en retrait, par rapport à une partie de guidage de copeaux (32), d'une distance (33).

5. Outil selon l'une des revendications 1 à 4, caractérisé en ce que les arêtes (34, 35, 36, 37) du corps coupant (2) sont conçues avec des arêtes vives, sous la forme d'arêtes de corps, une arête (37) présentant, suivant une configuration à facettes, une face de dépouille longitudinale (38), et un guide de lame prévu au niveau du porte-outil (1), dans la zone de la face de dépouille longitudinale (38), étant pourvu respectivement d'un rayon (41).

FIG 2

FIG 1

FIG 3

FIG 4

FIG 5

FIG 6

FIG 8

FIG 7

FIG 9

FIG 10